# EUROPÄISCHE PATENTSCHRIFT

(11) **EP 3 530 598 B1**
(45) Veröffentlichungstag und Bekanntmachung des Hinweises auf die Patenterteilung: **23.03.2022**
(21) Anmeldenummer: 19157488.8
(22) Anmeldetag: 18.11.2016
(51) Int. Cl.: B65G 47/86

(54) **ANTRIEBSSYSTEM FÜR EINE BEHÄLTERTRANSPORTSTRECKE SOWIE BEHÄLTERTRANSPORTSTRECKE MIT EINEM SOLCHEN ANTRIEBSSYSTEM**
DRIVE SYSTEM FOR A CONTAINER CONVEYING SECTION, AND CONTAINER CONVEYING SECTION COMPRISING A DRIVE SYSTEM OF SAID TYPE
SYSTÈME D'ENTRAÎNEMENT POUR UNE SECTION DE TRANSPORT DE RÉCIPIENTS ET SECTION DE TRANSPORT DE RÉCIPIENTS POURVUE D'UN TEL SYSTÈME D'ENTRAÎNEMENT

(30) Priorität: 26.11.2015 DE 102015120540
(43) Veröffentlichungstag der Anmeldung: 28.08.2019
(62) Teilanmeldung aus: 16798172.9
(73) Patentinhaber: KHS GmbH, 44143 Dortmund (DE)
(72) Erfinder: Fahldieck, Andreas, 55743 Idar-Oberstein (DE); Clüsserath, Ludwig, 55543 Bad Kreuznach (DE)

(56) Entgegenhaltungen:
- DD-A1- 103 703
- GB-A- 1 560 361
- US-A- 1 047 288
- US-A- 2 500 465

## Beschreibung

Die Erfindung bezieht sich auf eine Behältertransportstrecke gemäß dem Oberbegriff des Patentanspruchs .

Behältertransportstrecken zum Transportieren von Behältern, insbesondere auch zum Transportieren von Flaschen, und dabei speziell von Behältern oder Flaschen aus Kunststoff, insbesondere aus PET (Polyethylenterephthalat) sind bekannt, insbesondere auch in einer Ausführung, in der mehrere, jeweils um eine vertikale Maschinenachse umlaufend angetriebene rotor- oder transportsternartige Behältertransporteure in einer Behältertransportrichtung aneinander anschließen. An den Behältertransporteuren sind um die jeweilige Maschinenachse verteilt mehrere Behälteraufnahmen gebildet, beispielsweise auch für einen hängenden Transport, der beispielsweise als PET-Flaschen ausgebildeten Behälter, z.B. Behälteraufnahmen in Form von Flaschenhaltern, Greifern oder Klammern.

Verläuft die Behältertransportstrecke durch eine Behälterbehandlungsmaschine oder ein Behälterbehandlungsaggregat, beispielsweise durch eine Maschine zum Reinigen, Sterilisieren, Füllen, Verschließen, Etikettieren und/oder Bedrucken der Behälter, so ist diese Behältertransportstrecke innerhalb der Maschine oder innerhalb des Aggregates von einem um die Maschinenachse umlaufend angetriebenen Behältertransporteur in Form eines Rotors gebildet, an dem die Behandlung der dortigen Behälteraufnahmen angeordneten Behälter erfolgt. Wenigstens ein weiterer, in Transportrichtung der Behälter vorausgehender oder nacheilender Behältertransporteur bildet dann in der Regel den Behältereinlauf oder Behälterauslauf der Behälterbehandlungsmaschine bzw. des Behälterbehandlungsaggregates.

Unabhängig von der speziellen Ausgestaltung der Behältertransportstrecke und der Behältertransporteure ist es erforderlich, die in Transportrichtung aneinander anschließenden Behältertransporteure gegenläufig und synchron derart anzutreiben, dass an jedem Behälterübergabebereich eine ordnungsgemäße und störungsfreie Übergabe der Behälter von einem Behältertransporteur an den in Transportrichtung folgenden Behältertransporteur erfolgt.

Da ein zentraler Antrieb sämtlicher umlaufender Behältertransporteure einer Behältertransportstrecke schon allein wegen eines hohen konstruktiven Aufwandes nicht wünschenswert ist, ist es bisher üblich, die einzelnen, in Transportrichtung aneinander anschließenden Behältertransporteure insbesondere auch bei Behältertransportstrecken, die allein dem Transport der Behälter zwischen Behälterbehandlungsmaschinen dienen, jeweils mit einem eigenen elektromotorischen Antrieb zu versehen, wobei diese Antriebe dann für einen störungsfreien Transport der Behälter entsprechend synchronisiert werden. Auch diese Antriebssystem bedeutet einen nicht unerheblichen konstruktiven und steuerungstechnischen Aufwand, ermöglicht es aber zumindest, die Maschinengestelle, die zur Lagerung der transportsternartigen Behältertransporteure notwendig sind, als schlanke Säulen auszubilden, wodurch u.a. die Zugänglichkeit einer Behältertransportstrecke für Reinigungs- und/oder Wartungs- und/oder Reparaturzwecke verbessert wird. US 1 047 288 A offenbart eine Behältertransportstrecke nach dem Oberbegriff des Anspruchs 1.

Aufgabe der Erfindung ist es, ein Antriebssystem aufzuzeigen, mit dem der Antrieb von wenigstens zwei in Transportrichtung aneinander anschließenden Behältertransporteuren einer Behältertransportstrecke wesentlich vereinfacht wird. Zur Lösung dieser Aufgabe ist eine Behältertransportstrecke entsprechend dem Patentanspruch 1 ausgebildet.

Eine Besonderheit des erfindungsgemäßen Behältertransportstrecke besteht darin, dass bei mehreren in Transportrichtung jeweils an einem Behälterübergabebereich aneinander anschließenden Behältertransporteuren umlaufender Bauart, d.h. bei jeweils um eine Maschinenachse umlaufenden Behältertransporteuren einer Behältertransportstrecke nur ein Behältertransporteur einen eigenen Antrieb aufweist, während die diesem Behältertransporteur in Transportrichtung vorausgehenden und/oder nacheilenden Behältertransporteure jeweils an ihrem Umfang für eine Drehmomentübertragung antriebsmäßig unmittelbar miteinander verbunden sind, und zwar derart, dass zwei in einem Behälterübergabebereich aneinander anschließende Behältertransporteure im weitesten Sinne sich an einander abwälzend jeweils eine entgegengesetzte Drehrichtung aufweisen. Die unmittelbare antriebsmäßige Verbindung wird dabei durch am Umfang der Behältertransporteure miteinander in Eingriff stehende magnetische Verzahnungen erreicht, wie sie aus der DD 103 703 für mechanische Übertragung grundsätzlich bekannt sind.

Behältertransporteure im Sinne der vorliegenden Erfindung sind insbesondere um jeweils eine vertikale oder im wesentlichen vertikale Maschinenachse umlaufend antreibbare Transportsterne einer Behältertransportstrecke, die zum Transport und dabei zum hängenden Transport von Behältern zwischen Maschinen oder Aggregaten einer Behälterbehandlungsanlage dienen. Ein Behältertransporteur ist im Sinne aber auch ein um eine vertikale oder um eine im Wesentlichen vertikale Maschinenachse umlaufender Rotor einer Behälterbehandlungsmaschine oder eines Behälterbehandlungsaggregates, beispielsweise einer Maschine oder eines Aggregates zum Reinigen, Sterilisieren, Füllen, Verschließen, Etikettieren oder Bedrucken von Behältern.

"Behälter" sind im Sinne der Erfindung insbesondere Dosen, Flaschen, Tuben, Pouches, jeweils aus Metall, Glas und/oder Kunststoff, aber auch andere Packmittel, insbesondere auch solche die zum Abfüllen von pulverförmigen, granulatartigen, flüssigen oder viskosen Produkten geeignet sind. Das Antriebssystem eignet sich aber insbesondere für den Antrieb von Behältertransportstrecken, auf denen Behälter, vorzugsweise Flaschen aus Kunststoff, beispielsweise PET transportiert werden, die sich durch geringes Gewicht (Masse) auszeichnen.

Durch die Verwendung nur eines Antriebs für einen der Behältertransporteure der Behältertransportstrecke ergibt sich neben einer Reduzierung des konstruktiven und steuerungstechnischen Aufwandes insbesondere auch eine Reduzierung des Bauvolumens bei den Behältertransporteuren, die erfindungsgemäß keinen eigenen Antriebsmotor aufweisen.

Der Ausdruck "im Wesentlichen" bzw. "etwa" bzw. "ca." bedeutet im Sinne der Erfindung Abweichungen vom jeweils exakten Wert um +/- 10%, bevorzugt um +/-5% und/oder Abweichungen in Form von für die Funktion unbedeutenden Änderungen.

Weiterbildungen der Erfindung sind Gegenstand der Unteransprüche. Weiterbildungen, Vorteile und Anwendungsmöglichkeiten der Erfindung ergeben sich auch aus der nachfolgenden Beschreibung von Ausführungsbeispielen und aus den Figuren.

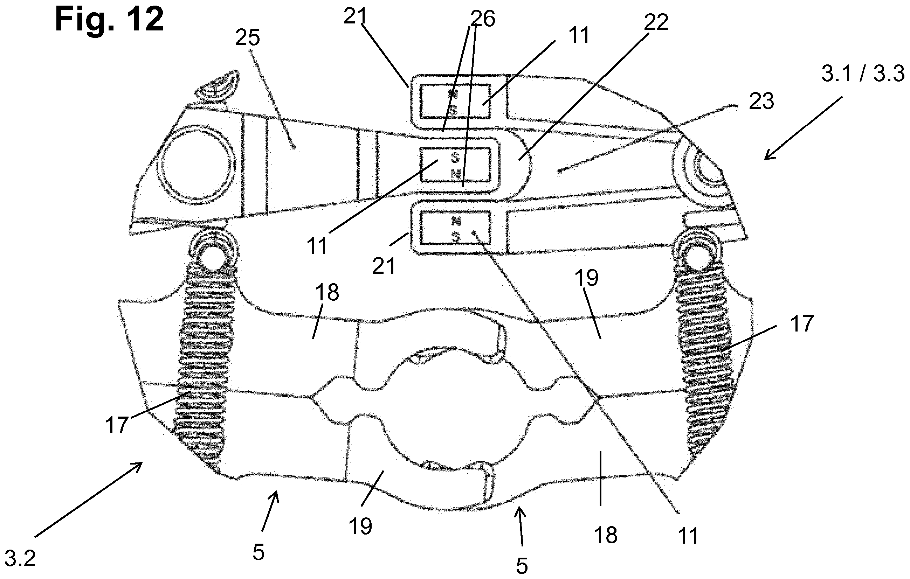

Die Erfindung wird im Folgenden anhand der Figuren an Ausführungsbeispielen näher erläutert. Es zeigen:
- Fig. 1: in vereinfachter perspektivischer Draufsicht zwei an einem einen Anschlussoder Behälterübergabebereich unmittelbar aneinander anschließende Behältertransporteure umlaufender Bauart einer Behältertransportstrecke, zusammen mit einem Behälter an einem der Behältertransporteure;
- Fig. 2: eine Draufsicht auf die beiden Behältertransporteure der Behältertransportstrecke der Fig. 1;
- Fig. 3: in vergrößerter Darstellung ein Detail A der Fig. 1;
- Fig. 4: in vergrößerter Teildarstellung und in Seitenansicht den Randbereich eines der beiden Behältertransporteure;
- Mag. Fig. 5 und 6: in vereinfachter Funktionsdarstellung den Anschluss- oder Behälterübergabebereich zwischen zwei, nur teilweise dargestellten Behältertransporteuren einer Behältertransportstrecke, und zwar in unterschiedlichen Betriebszuständen;
- Mag. Fig. 7: eine Darstellung eines Details A der Fig. 5;
- Mag. Fig. 8: eine Darstellung eines Details A der Fig. 6;

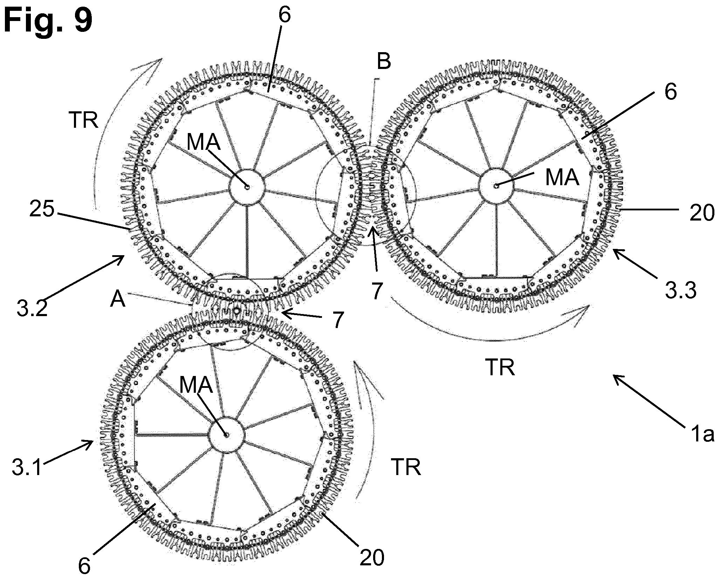

- Fig. 9: in vereinfachter Draufsicht drei jeweils an einem einen Anschluss- und Behälterübergabebereich unmittelbar aneinander anschließende Behältertransporteure umlaufender Bauart einer Behältertransportstrecke;

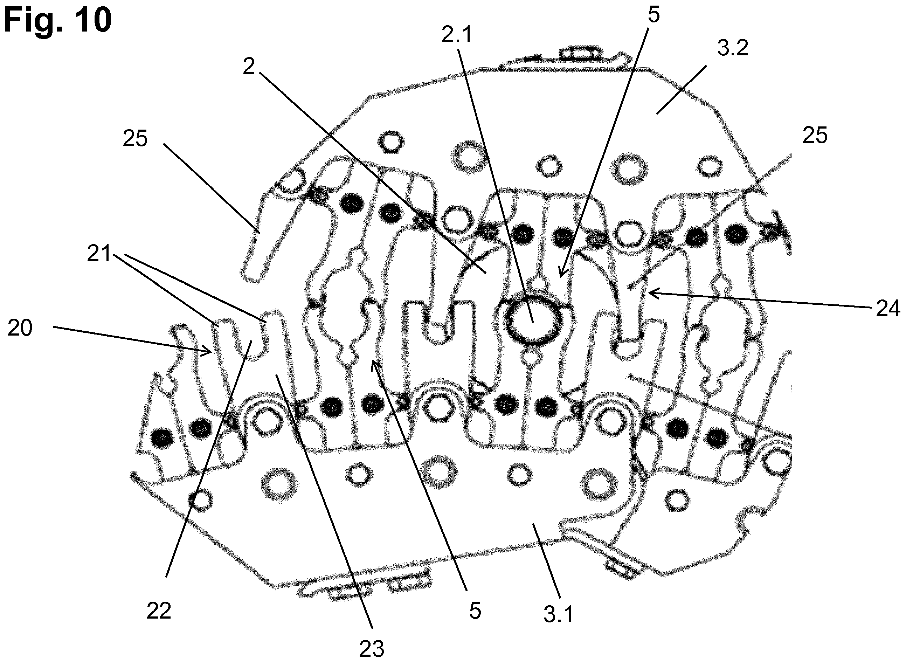

- Fig. 10: eine Darstellung des Details A der Fig. 9;

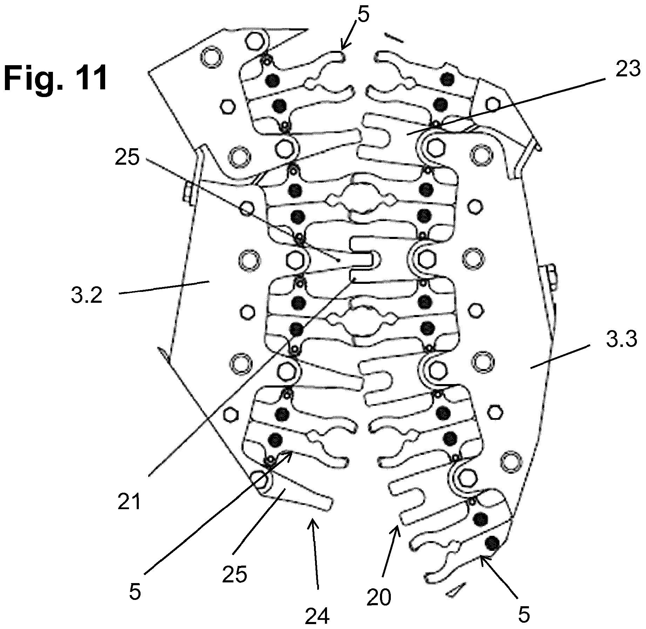

- Fig. 11: eine Darstellung des Details B der Fig. 9;
- Mag. Fig. 12: eine vergrößerte Teildarstellung eines der Anschluss- oder Übergabebereiche zwischen den Behältertransporteuren der Fig. 9.

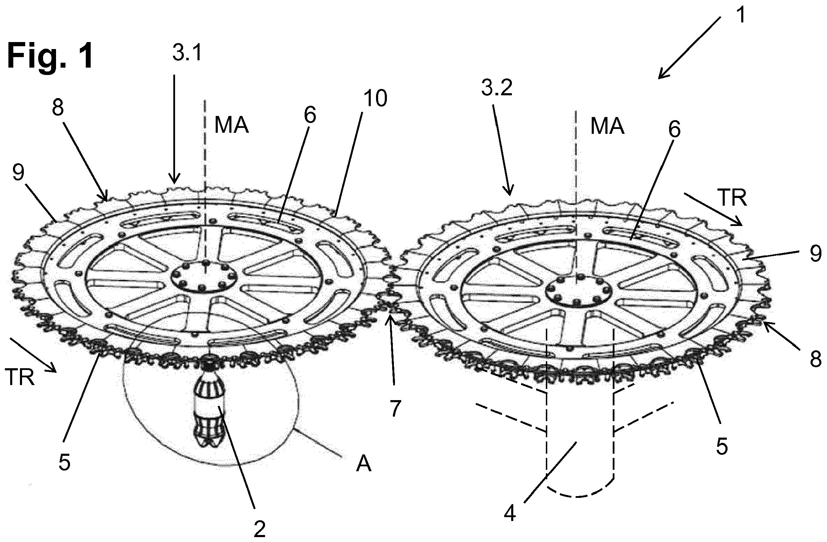

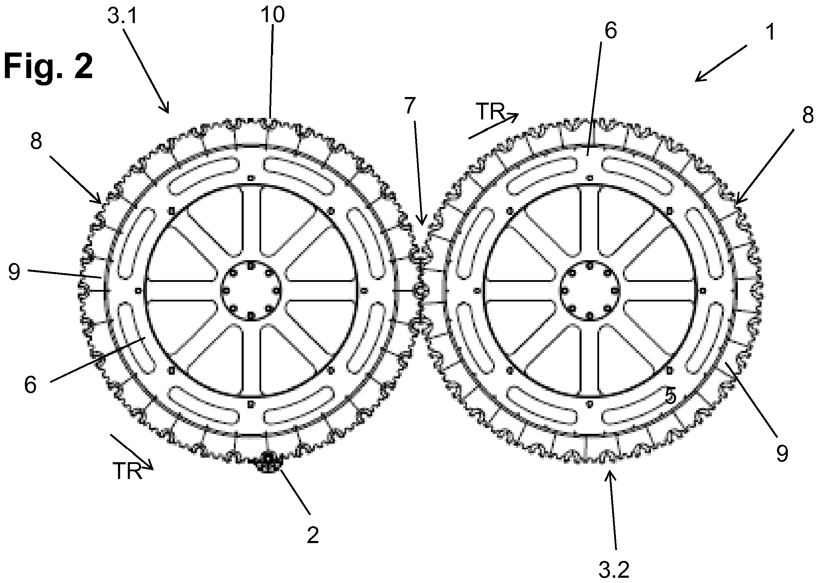

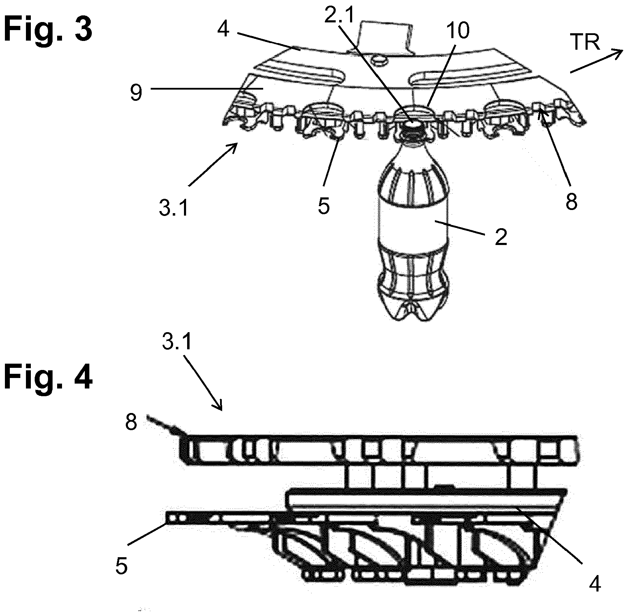

In den Figuren 1 - 4 ist 1 eine nicht zur Erfindung gehörige Behältertransportstrecke zum Transportieren von Behältern 2 in einer Transportrichtung (Pfeile TR). Die Behälter 2 sind vorzugsweise solche aus Kunststoff bzw. PET (Polyethylenterephthalat). Die Behälter 2 sind beispielhaft als Flaschen dargestellt. Die Behältertransportstrecke 1 umfasst bei der dargestellten Ausführungsform zwei Behältertransporteure 3.1 und 3.2 umlaufender Bauart, d.h. Behältertransporteure 3.1 und 3.2, die jeweils an einem eigenen Maschinenelement oder an einer eigenen Tragsäule, die in der Figur 1 für den Behältertransporteur 3.2 mit 4 angedeutet ist, um eine vertikale oder im Wesentlichen vertikale Maschinenachse MA drehbar gelagert sind und während des Betriebes der Behältertransportstrecke 1 in Richtung der Pfeile TR um ihre Maschinenachse MA umlaufen. Bei der für die Fig. 1 gewählten Darstellung folgt der Behältertransporteur 3.2 in Transportrichtung (Pfeile TR) auf den Behältertransporteur 3.1. Die beiden im Wesentlichen identisch ausgebildeten Behältertransporteure 3.1 und 3.2 sind jeweils für einen hängenden Transport der Behälter 2 ausgebildet, d.h. sie weisen hierfür an ihrem Umfang in gleichmäßigen Teilungsabständen um die Maschinenachse MA verteilt eine Vielzahl von Behälterträgern oder Behälteraufnahmen 5 auf, die am Umfang eines Rotors oder eines speichenradartigen Tragrades 6 vorgesehen sind und an denen die Behälter 2 an einem am Behälterhals unterhalb ihrer Behälteröffnung 2.1 ausgebildeten Flansch oder Neck-Ring hängend gehalten sind, so dass sie mit ihren Behälterachsen parallel oder im Wesentlichen parallel zur Maschinenachse MA orientiert sind. Die Behälteraufnahmen 5 sind dabei beispielsweise Behälterklammern oder aber zum Umfang des jeweiligen Behältertransporteures 3.1 bzw. 3.2 hin offene Ausnehmungen, wie dies dem Fachmann bekannt ist.

Die beiden Behältertransporteure 3.1 und 3.2 laufen während des Betriebes der Transportstrecke 1 um ihre Maschinenachse MA synchron, aber gegenläufig um, und zwar bei der für die Fig. 1 gewählten Darstellung der Behältertransporteur 3.1 im Gegenuhrzeigersinn und der Behältertransporteur 3.2 im Uhrzeigersinn, und zwar derart, dass immer dann, wenn eine Behälteraufnahme 5 des Behältertransporteurs 3.1 mit einem Behälter 2 den Behälterübergabebereich 7 erreicht hat, dort auch eine freie Behälteraufnahme 5 des Behältertransporteurs 3.2 zur Aufnahme dieses an den Behälterübergabebereich 7 geförderten Behälters 2 bereitsteht.

Eine Besonderheit besteht darin, dass nur ein Behältertransporteur der gesamten Behältertransportstrecke 1, beispielsweise nur der Behältertransporteur 3.2, einen eigenen elektromotorischen Antrieb aufweist oder mit einem eigenen elektromotorischen Antrieb verbunden ist, während weitere, dem Behältertransporteur 3.2 in Transportrichtung (Pfeile TR) vorausgehende oder nachfolgende Behältertransporteure, d.h. bei der dargestellten Ausführungsform der Behältertransporteur 3.1 keinen eigenen Antriebsmotor aufweisen, sondern durch eine direkte, unmittelbare Drehmomentübertragung, die unmittelbar zwischen den Behältertransporteuren bzw. deren Rotoren oder Tragrädern 4 wirkt, vom Behältertransporteur 3.2 angetrieben werden.

Die Drehmomentübertragung wird bei der in den Fig. 1 - 4 dargestellten und nicht zur Erfindung gehörigen Ausführungsform durch zahnrad- oder zahnkranzartige, d.h. mechanische Verzahnungen 8 erreicht, die am Umfang der Behältertransporteure 3.1 und 3.2 bzw. deren Rotoren oder Tragräder 4 vorgesehen sind und die am Behälterübergabebereich 7 derart miteinander in Eingriff stehen, dass am Behälterübergabebereich 7 ständig jeweils wenigstens ein Zahn der Verzahnung 8 beispielsweise des Transportrades 3.2 in eine zwischen zwei Zähnen der Verzahnung 8 des Transportrades 3.1 gebildete Zahnlücke eingreift oder umgekehrt, so dass eine ständige, spielfreie oder im Wesentlichen spielfreie antriebsmäßige Verbindung zwischen den in Transportrichtung (Pfeile TR) aneinander anschließenden Behältertransporteuren 3.1 und 3.2 sowie auch zwischen eventuell weiteren Behältertransporteuren am jeweiligen Behälterübergabebereich 7 besteht.

Wie die Figuren zeigen, ist die jeweilige Verzahnung 8 bei der dargestellten Ausführungsform von einer Vielzahl von Segmenten 9 gebildet, die die Zähne der Verzahnung an ihrer bezogen auf die Maschinenachse MA radial außen liegenden Seite aufweisen und in Umfangsrichtung des jeweiligen Behältertransporteures aneinander anschließend am Umfang des betreffenden Rotors oder Tragrades 4 vorgesehen sind. Selbstverständlich kann die Verzahnung auch einstückig ausgebildet sein. Die Ausbildung ist weiterhin beispielsweise so getroffen, dass die jeweilige Verzahnung 8 oder der Fuß- oder Teilkreis dieser Verzahnung einen radialen Abstand von der zugehörigen Maschinenachse MA aufweist, der gleich oder im Wesentlichen gleich demjenigen radialen Abstand ist, den die Behälteraufnahmen 5 oder die Behälterachsen der an den Behälteraufnahmen 5 gehaltenen Behälter 2 von der Maschinenachse MA besitzen. Weiterhin ist die Ausbildung bevorzugt so getroffen, dass sich die jeweilige Verzahnung 8 in einer Achsrichtung parallel zur Maschinenachse in unmittelbarer Nähe der Behälteraufnahmen 7, d.h. in einem Abstand von den Behälteraufnahmen 5 befindet, der kleiner ist als die Höhe, die die Behälter 2 in Richtung ihrer Behälterachse aufweisen und damit auch kleiner ist als die Abmessung, die der von den Behältern 2 beim Transport eingenommene Bewegungsraum in dieser Achsrichtung besitzt.

Bei der dargestellten Ausführungsform befindet sich die Verzahnung 8 jeweils oberhalb der Behälteraufnahmen 5 und auch oberhalb der Behälteröffnungen 2.1. Jede Verzahnung 8 ist dabei aber großzügig an jeder Behälteraufnahme 5 und damit an der Behälteröffnung 2.1 jedes an einer Behälteraufnahme 5 hängend gehaltenen Behälters 2 ausgespart, wie dies in den Figuren mit den jeweils am Übergang zwischen zwei Segmenten 9 gebildeten Aussparungen 10 gezeigt ist. Trotz dieser Aussparungen 10 ist gewährleistet, dass in jeder Dreh- oder Winkelstellung der Behältertransporteure 3.1 und 3.2 die Verzahnungen 8 der aneinander anschließenden Behältertransporteure 3.1 und 3.2 am Behälterübergabebereich 7 ständig zuverlässig miteinander kämmen und in Eingriff stehen. Der Behälterübergabebereich 7 bildet also auch denjenigen Bereich, an dem die Drehmomentübertragung erfolgt.

Die am Umfang des Behältertransporteures 3.1 und 3.2 offenen Aussparungen 10 sind bei der dargestellten Ausführungsform teilkreis- oder halbkreisförmig ausgebildet, und zwar mit einem Radius, der gleich oder im Wesentlichen gleich dem Abstand ist, den zwei benachbarte Zähne der Verzahnung 8 voneinander aufweisen. Jede Aussparung 10 ist dabei von zwei Ausnehmungen gebildet, die am Übergang zwischen den Segmenten 9 vorgesehen sind und sich zu der jeweiligen Aussparung 10 ergänzen. Bevorzugt ist weiterhin der Rand jeder Aussparung 10 als Schräge so ausgeführt, dass der offene Bereich der Verzahnung 8 oberhalb der Behälteröffnung 2.1 des jeweiligen an einer Behälteraufnahme 5 gehaltenen Behälters 2 vergrößert ist. Durch die Aussparungen 10 wird u.a. verhindert, dass beim Kämmen der Verzahnungen 8 anfallender Abrieb in die Behälter 2 gelangt. Letzteres kann auch durch eine zwischen der jeweiligen Verzahnung 8 und der Behälteraufnahme 5 vorgesehene und die Behälteröffnungen 2.1 gegenüber der Verzahnung 8 schützende Abdeckung erreicht werden, beispielsweise durch ein ringförmiges Abdeckblech, welches ebenfalls an dem speichenradartigen Tragrad 6 des jeweiligen Behältertransporteures 3.1 bzw. 3.2 achsgleich mit der Maschinenachse MA befestigt ist und beispielsweise durchgehend oder segmentiert ausgeführt ist.

Die Aussparungen 10 können jedoch auch abweichend ausgebildet sein, wobei wesentlich ist, dass die Aussparungen 10 eine Größe aufweisen, die mindestens dem Durchmesser des Behälterhalses entspricht.

Die vorstehend beschriebene Ausbildung der Behältertransporteure 3.1 und 3.2 mit den Verzahnungen 8 ermöglicht nicht nur die Drehmomentübertragung von dem mit einem Antrieb ausgestatteten Behältertransporteur, d.h. bei der dargestellten Ausführungsform von dem Behältertransporteur 3.2, auf einen motorlosen Behältertransporteur, d.h. bei der dargestellten Ausführungsform auf den Behältertransporteur 3.1 in besonders einfacher Weise, sondern ermöglicht es auch, den Raum oberhalb und unterhalb der Behältertransporteure 3.1 und 3.2 von jeglichen antriebsmäßigen Verbindungen zwischen den in Transportrichtung aufeinanderfolgenden Behältertransporteuren frei zu halten und dabei insbesondere auch die zur Lagerung der Behältertransporteure 3.1 und 3.2 dienenden Maschinenelemente oder Maschinengestelle 4 säulenartig mit einem Durchmesser auszubilden, der deutlich kleiner ist als derjenige Durchmesser, den die Behältertransporteure 3.1 und 3.2 aufweisen.

Anstelle der zahnradartigen Verzahnungen 8 können auch andere Maschinenelemente verwendet werden, die eine unmittelbare und spielfreie oder im Wesentlichen spielfreie Drehmomentübertragung, genauer Übertragung einer Umfangskraft zwischen den in Transportrichtung aneinander anschließenden Behältertransporteuren 3.1 und 3.2 ermöglichen, und zwar wiederum derart, dass durch diese Drehmoment- oder Umfangskraftübertragung die in Transportrichtung (Pfeile TR) aneinander anschließenden Behältertransporteure jeweils eine entgegengesetzte Drehrichtung aufweisen, wie dies für die Übergabe der Behälter 2 von dem einen Behältertransporteur 3.1 an den folgenden Behältertransporteur 3.2 am Behälterübergabebereich 7 erforderlich ist.

Zur besseren Lesbarkeit wird nachfolgend sowohl in der Beschreibung, als auch in den Ansprüchen lediglich von einer Drehmomentübertragung oder sinngemäß gesprochen, worunter im Rahmen der vorliegenden Anmeldung aber ausdrücklich immer auch die physikalisch richtigere Übertragung von Umfangskräften zu verstehen ist.

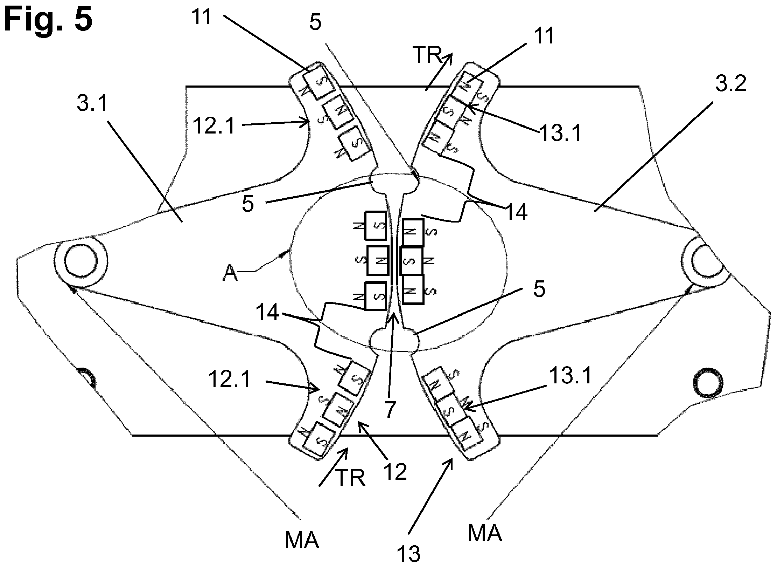

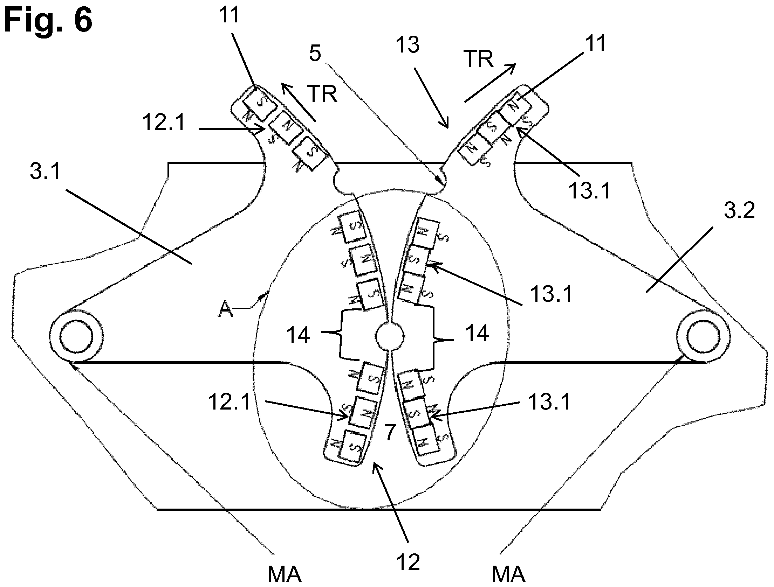

Die Fig. 5 - 8 zeigen in schematischer Darstellung erfindungsgemäß eine Drehmomentübertragung mit Hilfe von Magneten 11, insbesondere mit Hilfe von Permanentmagneten, die am Umfang der Behältertransporteure 3.1 und 3.2, beispielsweise wiederum oberhalb der Behälteraufnahmen 5 vorgesehen sind. Die Behälteraufnahmen 5 sind in den Fig. 5 - 8 nur sehr vereinfacht als zum Umfang der Behältertransporteure 3.1 und 3.2 in offene Aussparungen dargestellt.

Die Magnete 11 bilden wirkungsmäßig eine magnetische Verzahnung 12 am Behältertransporteur 3.1 und eine magnetische Verzahnung 13 am Behältertransporteur 3.2. Die Magnete 11 der magnetischen Verzahnungen 12 und 13 wirken über einen Magnetspalt, der an dem jeweiligen Behälterübergabebereich 7 bzw. an einem dortigen Drehmoment-Übertragungsbereich gebildet ist, in der nachstehend noch näher beschriebenen Weise zur Übertragung des Drehmomentes von dem den Antriebsmotor aufweisenden Behältertransporteur, beispielsweise von dem Behältertransporteur 3.2, auf den keinen Antriebsmotor aufweisenden Behältertransporteur, beispielsweise auf den Behältertransporteur 3.1 zusammen. Der Behälterübergabebereich 7 bildet wiederum denjenigen Bereich, an dem die Drehmomentübertragung erfolgt.

Der einfacheren Darstellung wegen ist in den Fig. 5 - 8 davon ausgegangen, dass dieser Magnetspalt am Umfang der Behältertransporteure 3.1 und 3.2 gebildet ist und sich radial oder im Wesentlichen radial zu den Maschinenachsen MA erstreckt.

Die Magnete 11 jeder magnetischen Verzahnung 12 und 13 sind jeweils in Gruppen 12.1 (magnetische Verzahnung 12) bzw. in Gruppen 13.1 (magnetische Verzahnung 13) angeordnet, wobei diese Gruppen 12.1 und 13.1 beispielsweise jeweils dieselbe Anzahl von Magneten 11 aufweisen, d.h. bei der dargestellten Ausführungsform jeweils drei Magnete 11. Weiterhin sind die Magnete 11 in jeder Gruppe 12.1 und 13.1 so ausgebildet bzw. angeordnet, dass die Gruppen 12.1 und 13.1 jeweils an ihrer Seite, die am Behälterübergabebereich 7 den Magnetspalt bildet, d.h. beispielsweise am Umfang der Behältertransporteure 3.1 bzw. 3.2 in Dreh- oder Transportrichtung (Pfeile TR) eine Polfolge aufweisen, in der die Polarität der Magnete 11 von Magnet zu Magnet wechselt. Die Magnete 11 in der Polfolge der Gruppen 12.1 sind dabei entgegengesetzt zu den Magneten 11 in der Polfolge der Gruppen 13.1 gepolt. Bei jeder Gruppe 12.1 sind also der bezogen auf die Drehoder Transportrichtung (Pfeil TR) erste Magnet 11 mit einer ersten Polarität, der nächstfolgende Magnet 11 mit einer zweiten der ersten entgegengesetzten Polarität und der nächstfolgende Magnet 11 wiederum mit der ersten Polarität an der den Magnetspalt bildenden Seite, z.B. am Umfang des Behältertransporteures 3.1 angeordnet. Bei jeder Gruppe 13.1 sind umgekehrt der bezogen auf die Dreh- oder Transportrichtung (Pfeil TR) erste Magnet 11 mit der zweiten Polarität, der nächstfolgende Magnet 11 mit der ersten Polarität und der nächstfolgende Magnet 11 wiederum mit der zweiten Polarität an der den Magnetspalt bildenden Seite, z.B. am Umfang des Behältertransporteures 3.1 angeordnet. Dabei sind beispielsweise die erste Polarität der Südpol S und die zweite Polarität der Nordpol N.

Es versteht sich, dass die Anzahl der Magnete 11 in den Gruppen 12.1 und 13.1 von Drei abweichen kann, wobei aber auch dann die Folge der abwechselnd unterschiedlichen Pole der Magnete 11 an den den Magnetspalt bildenden Seiten der Gruppen 12.1 und 13.1, d.h. bei der dargestellten Ausführungsform am Umfang des jeweiligen Behältertransporteures 3.1 und 3.2 besteht. Der Teilungsabstand der Gruppen 12.1, d.h. der Abstand, den die Gruppen 12.1 von einander aufweisen, ist gleich dem Teilungsabstand der Gruppen 13.1. Die Anzahl der Gruppen 12.1 und 13.1 ist bevorzugt an den Behältertransporteuren 3.1 und 3.2 identisch.

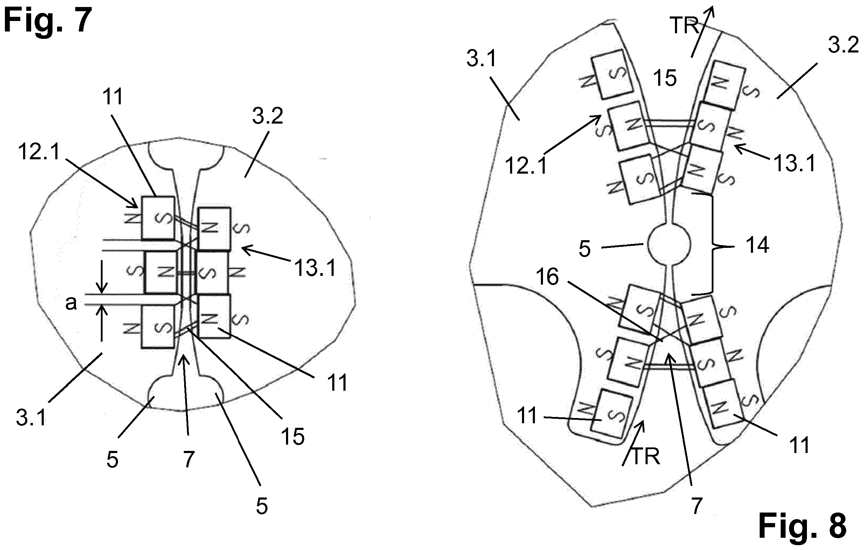

Die Anordnung ist weiterhin so getroffen, dass zwischen den einzelnen in Transportrichtung (Pfeil TR) aufeinanderfolgenden Gruppen 12.1 und ebenso zwischen den in Transportrichtung (Pfeil TR) aufeinanderfolgenden Gruppen 13.1 ein Zwischenraum oder eine Unterbrechung 14 gebildet ist, an der sich jeweils eine Behälteraufnahme 5 befindet. Weiterhin weisen die Pole der Magnete 11 in den Gruppen 12.1 in Dreh- oder Transportrichtung einen größeren gegenseitigen Abstand voneinander auf als die Pole der Magnete 11 der Gruppen 13.1, d.h. bei der dargestellten Ausführungsform sind die Magnete 11 in den Gruppen 13.1 jeweils unmittelbar aneinander anschließend vorgesehen, während die Magnete 11 der Gruppen 12.1 einen gegenseitigen Abstand a besitzen, wie dies insbesondere in der Fig. 7 deutlich erkennbar ist.

Wie insbesondere auch die Fig. 7 und 8 zeigen, wirken zu jedem Zeitpunkt bzw. in jeder Drehstellung des umlaufend angetriebenen Behältertransporteures 3.2 mehrere Magnete 11 der magnetischen Verzahnung 13 mit Magneten 11 entgegengesetzter Polarität der magnetischen Verzahnung 12 zusammen. Dies ist in den Fig. 7 und 8 mit den Doppellinien 15 angedeutet, so dass über die zwischen den Magneten 11 wirkenden magnetischen Kräfte eine Drehmomentübertragung vom Behältertransporteur 3.2 auf den Behältertransporteur 3.1 erfolgt, letzterer also mit dem Behältertransporteur 3.2 mitbewegt wird, und zwar in einer zur Drehrichtung des Behältertransporteures 3.2 entgegengesetzten Drehrichtung. Durch den unterschiedlichen Abstand der Pole der Magnete 11 in den Gruppen 12.1 und 13.1 werden weiterhin zwischen den magnetischen Verzahnungen 12 und 13 abstoßende Magnetkräfte erreicht, wie dies in den Fig. 7 und 8 mit den Einfachlinien 16 angedeutet ist. Diese abstoßenden Magnetkräfte sind in der Regel kleiner als die die Drehmomentübertragung bewirkenden Magnetkräfte (Doppellinien 15).

Die abstoßenden Magnetkräfte (Einfachlinien 16) bewirken aber eine erhöhte "Steifigkeit" der Drehmomentübertragung, d.h. es wird ein Reduzierung der, bei rein magnetischer Drehmomentübertragung unabdingbaren Restelastizität des Antriebs erreicht.

Ein Vorteil der magnetischen Drehmomentübertragung besteht u.a. darin, dass ein Abrieb an den miteinander zusammenwirkenden magnetischen Verzahnungen 12 und 13 nicht auftritt. Insbesondere dann, wenn sich die magnetischen Verzahnungen 12 und 13 bzw. der zwischen diesen Verzahnungen gebildete Magnetspalt unterhalb der Behälteröffnungen 2.1 der an den Aufnahmen 5 angeordneten Behälter 2 befinden, kann auf eine die Behälteröffnungen 2.1 schützende Abdeckung verzichtet werden.

Die Fig. 9 -11 beziehen sich auf eine nicht erfindungsgemäße Behältertransportstrecke 1a, die drei in der Transportrichtung (Pfeile TR) jeweils an einem Behälterübergabebereich 7 (Detaildarstellungen der Figuren 10 und 11) aneinander anschließende Behältertransporteure 3.1, 3.2 und 3.3 aufweist. Jeder Behältertransporteur umfasst wiederum ein an einem Maschinengestell um eine vertikale Maschinenachse MA drehbar gelagertes Tragrad, 6 an dessen Umfang die Behälteraufnahmen 5 für eine hängende Halterung der vorzugsweise als Flaschen ausgebildeten Behälter 2 an ihrem Neck-Ring ausgebildet sind.

Wie die Fig. 12 beispielhaft für eine erfindungsgemäße Ausführungsvariante der Behälterbehandlungsstrecke 1a zeigt, sind die Behälteraufnahmen 5 in der dem Fachmann bekannten Weise klammer- oder greiferartig mit jeweils zwei schwenkbar gelagerten und durch eine Feder 17 vorgespannten Greiferarmen 18 und 19 ausgeführt, die in ihrer Schließstellung den jeweiligen als Flasche ausgebildeten Behälter 2 am Flaschenhals klammerartig halten. Die Behälteraufnahmen mit ihren Tragarmen 18 und 19 und der zugehörigen Feder 17 sind jeweils als komplette Baueinheiten am Umfang des betreffenden Tragrades 6 vorgesehen, so dass die Behälteraufnahmen 5 radial über die Umfangsfläche des Tragrades 6 vorstehen.

Auch bei der Behältertransportstrecke 1a weist wiederum nur einer der Behältertransporteure, beispielsweise der Behältertransporteur 3.2, einen eigenen elektrischen Antrieb auf, während die übrigen Behältertransporteure, d.h. beispielsweise der dem Behältertransporteur 3.2 in Transportrichtung (Pfeile TR) vorausgehende und der dem Behältertransporteur 3.2 in Transportrichtung (Pfeile TR) nachfolgende Behältertransporteur 3.3 keinen eigenen Antriebsmotor aufweisen, sondern am jeweiligen Behälterübergabebereich 7 durch die dort gebildete Drehmomentübertragung von dem den Antriebsmotor aufweisenden Behältertransporteur, beispielsweise von dem Behältertransporteur 3.2 angetrieben sind.

Es versteht sich von selbst, dass es bei anderen Ausführungsformen der vorliegenden Erfindungen auch vorgesehen sein kann, bei mehreren vorhandenen Behältertransporteuren nicht nur einen sondern auch zwei oder mehr aber nicht alle dieser Behältertransporteure mit einem eigenen elektrischen Antrieb auszustatten, so dass zumindest ein Behältertransporteur ohne eigenen Antrieb ausgeführt ist und mittels der erfindungsgemäß vorgestellten magnetischen Drehmomentübertragung angetrieben oder bewegt wird.

Die Drehmomentübertragung wird bei der Behältertransportstrecke 1a letztlich wiederum durch Magnetkraft erzeugt. Hierfür sind bei zwei in Transportrichtung (Pfeile TR) aneinander anschließenden Behältertransporteuren einer dieser Transporteure, d.h. bei der dargestellten Ausführungsform die Behältertransporteure 3.1 und 3.3 an ihrem Umfang jeweils mit einer Art Verzahnung 20 versehen, die eine Vielzahl von jeweils paarweise angeordneten Zähnen 21 aufweist, wobei zwischen den Zähnen 21 jedes dieser Zahnpaare jeweils eine Lücke 22 gebildet ist.

Jedes Zahnpaar mit den beiden Zähnen 21 und der zwischen diesen Zähnen gebildete Lücke 22 ist als Platine 23 am Umfang des betreffenden Tragrades 6 so befestigt, dass es mit seinen Zähnen 21 radial zur Maschinenachse MA über den Umfang des Tragrades 6 vorsteht. Wie insbesondere die Fig. 10 und 11 zeigen, ist die Verzahnung 20 derart unterbrochen, dass sich in Draufsicht auf den Behältertransporteur 3.1 und 3.3 zwischen zwei Zahnpaaren oder Platinen 23 eine Behälteraufnahme 5 befindet, und zwar im selben Teilungsabstand von den beiden Lücken 22 benachbarter Platinen 23, wobei dieser Teilungsabstand auch dem halben Abstand zweier in Drehrichtung des Behältertransporteurs 3.1 bzw. 3.3 aufeinanderfolgenden Lücken 22 der Verzahnung 21 entspricht.

Es ist jedoch nicht zwingend, dass der Teilungsabstand auch dem halben Abstand zweier in Drehrichtung des Behältertransporteurs 3.1 bzw. 3.3 aufeinander folgenden Lücken 22 der Verzahnung 21 entspricht. In Fällen, bei denen die Behälteraufnahmen einen größeren Abstand voneinander aufweisen, ist es auch möglich, dass mehrere Zähne 21 und/oder Lücken 22 zwischen zwei Behälteraufnahmen angeordnet werden können.

Der andere, am jeweiligen Behälterübergabebereich 7 anschließende Behältertransporteur, d.h. bei der dargestellten Ausführungsform der Behältertransporteur 3.2 weist eine Verzahnung 24 auf, die von mehreren fingerartigen, radial über den Umfang des betreffenden Tragrades 6 wegstehenden Zähnen 25 gebildet ist, deren gegenseitiger Teilungsabstand dem Teilungsabstand der Lücken 22 der Verzahnung 20 entspricht, so dass am jeweiligen Behälterübergabebereich 7, der auch der Drehmomentübertragungsbereich ist, zu jedem Zeitpunkt und in jeder Drehstellung der Behältertransporteure 3.1 - 3.3 zumindest jeweils ein Zahn 25 in eine Lücke 22 eingreift. Die Anzahl der Zähne 25 ist bevorzugt gleich der Anzahl der Lücken 22. Zwischen zwei in Umfangsrichtung aufeinanderfolgenden Zähnen 25 ist in Draufsicht auf den betreffenden Behältertransporteur, nämlich auf den Behältertransporteur 3.2 jeweils eine Behälteraufnahme 5 vorgesehen, und zwar, beim dargestellten Ausführungsbeispiel, in demselben Teilungsabstand von beiden benachbarten Zähnen 25. Die beiden Verzahnungen 20 und 24, die sich beispielsweise auf einem Niveau unterhalb der Behälteröffnungen 2.1 befinden, sind bei der dargestellten Ausführungsform keine Verzahnungen, bei denen die Drehmomentübertragung mechanisch dadurch erfolgt, dass die Zähne 25 gegen die Flanken der Zähne 21 anliegen.

Die Drehmomentübertragung im erfindungsgemäßen Ausführungsbeispiel nach Figur 12 erfolgt vielmehr durch Magnetkräfte, die im Wesentlichen in Umfangsrichtung der Behältertransporteure 3.1 - 3.3 zwischen den Zähnen 21 und 25 wirken. Hierfür sind an den Zähnen 21 und 25 Permanentmagnete 11 vorgesehen, und zwar derart, dass der Permanentmagnet 11 jedes in eine Lücke 22 eingreifenden Zahnes 25 mit seinen Polen jeweils einem an einem Zahn 21 vorgesehenen Permanentmagneten 11 zugewandt ist, der dieselbe Polarität aufweist, d.h. der Südpol S des Permanentmagneten 11 des Zahnes 25 ist dem Südpol S des Permanentmagneten 11 an einem die Lücke 22 bildenden Zahn 21 und der Nordpol N des Permanentmagneten 11 des Zahnes 25 ist dem Nordpol N des Permanentmagneten 11 am anderen die Lücke 22 bildenden Zahnes 21 zugewandt, wie dies auch in der Fig. 12 dargestellt ist. Hierdurch ergeben sich zwischen den beiden Verzahnungen 20 und 24 und deren Zähne 21 und 25 abstoßende und jeweils im Wesentlichen tangential zur Drehrichtung der Behältertransporteure 3.1, 3.2 und 3.3 wirkende Magnetkräfte. Damit wird eine Drehmomentübertragung zwischen den Verzahnungen 20 und 24 erreicht, ohne dass sich die Zähne 21 und 25 berühren, vielmehr verbleibt zwischen jedem in eine Lücke 22 eingreifenden Zahn 25 und den Zähnen 21 ein Spalt oder Magnetspalt 26, wodurch insbesondere ein mechanischer Abrieb beim Zusammenwirken der Verzahnungen 20 und 24 bzw. bei der Drehmomentübertragung vermieden wird.

Bei der die magnetischen Verzahnungen 12 und 13 bzw. 20 und 24 aufweisenden Behältertransportstrecke 1 und 1a gilt ebenfalls, dass durch die Anordnung der magnetischen Verzahnungen 12 und 13 bzw. 20 und 24 in unmittelbarer Nähe der Behälteraufnahmen 5, d.h. in einem Abstand von den Behälteraufnahmen 5, der kleiner ist als die Höhe der Behälter 2 und damit auch kleiner ist als die Abmessung, die der Bewegungsraum der Behälter 2 in der Achsrichtung parallel zur Maschinenachse MA aufweist, das Maschinengestellt zur Lagerung der Behältertransporteure 3.1 - 3.3 säulenartig mit einem gegenüber dem Behältertransporteur stark reduzierten Durchmesser ausgeführt werden kann und sich unterhalb der Behältertransporteure 3.1 - 3.3 ein für Reinigungs-, Wartungsund Reparaturzwecke gut zugänglicher Raum ergibt.

Die Erfindung wurde voranstehend an Ausführungsbeispielen beschrieben. Es versteht sich, dass zahlreiche Änderungen sowie Abwandlungen möglich sind. So wurde vorstehend angenommen, dass die Behältertransporteure 3.1 - 3.3 Transportsterne der Behältertransportstrecke 1 sind. Grundsätzlich kann aber auch wenigstens einer der Behältertransporteure 3.1 - 3.3 das umlaufende Transportelement (Rotor) einer Behälterbehandlungsmaschine oder eines Behälterbehandlungsaggregates sein, beispielsweise einer Maschine oder eines Aggregates zum Reinigen, Sterilisieren, Füllen oder eines Aggregates oder einer Maschine um Ausstatten von Behältern, beispielsweise zum Etikettieren oder Bedrucken von Behältern usw. Dieses Transportelement der betreffenden Maschine oder des betreffenden Aggregates ist dabei dann ebenfalls letztlich Bestandteil einer Behältertransportstrecke, nämlich Teil der Behältertransportstrecke, auf dem die Behälter durch die Maschine bewegt werden.

Vorstehend wurde davon ausgegangen, dass die Behältertransporteure 3.1 - 3.3 für eine hängende Aufnahme der Behälter 2 an den Behälteraufnahmen 5 ausgebildet sind. Grundsätzlich besteht auch die Möglichkeit, dass zumindest ein Behältertransporteur so ausgeführt ist, dass dort die Behälter 2 mit ihrem Boden auf wenigstens einer Behälterstandfläche aufstehend und/oder anderweitig am Behältertransporteur gehalten sind.

Vorstehend wurde davon ausgegangen, dass die Tragräder 6 mittig gelagert werden. Dieses ist jedoch nicht zwingend. Ebenfalls ist es möglich, die Tragräder 6 ringartig auszubilden und an ihrem Umfang zu lagern, wodurch sich beispielsweise eine größere Freiheit zur Gestaltung des inneren Bauraums ergibt.

### Bezugszeichenliste

- 1: Behältertransportstrecke
- 2: Behälter
- 2.1: Behälteröffnung
- 3.1, 3.2: Behältertransporteur
- 4: Maschinengestell
- 5: Behälteraufnahme
- 6: Tragrad
- 7: Behälterübergabebereich
- 8: Verzahnung
- 9: Segment
- 10: Aussparung
- 11: Magnet
- 12, 13: magnetische Verzahnung
- 12.1, 13.1: Gruppe
- 14: Unterbrechung
- 15, 16: Linie
- 17: Feder
- 18, 19: Tragarm
- 20: Verzahnung
- 21: Zähne
- 22: Lücke
- 23: Zahnpaar
- 24: Verzahnung
- 25: Zahn
- 26: Spalt
- a: Abstand
- TR: Transport- oder Drehrichtung
- MA: Maschinenachse

## Patentansprüche

1. Behältertransportstrecke (1, 1a) mit wenigstens zwei an einem Behälterübergabebereich (7) aneinander anschließenden und jeweils um eine Maschinenachse (MA), vorzugsweise um eine vertikale oder im Wesentlichen vertikale Maschinenachse (MA), in einer gegenläufigen Drehbewegung umlaufend antreibbaren rotor- und/oder sternradartigen Behältertransporteuren (3.1, 3.2, 3.3), mit Aufnahmen (5) an den Behältertransporteuren (3.1, 3.2, 3.3) zum Halten und Transportieren der Behälter (2) in einer Transportrichtung (TR), sowie mit einem Antriebssystem mit einem Antrieb für Behältertransporteure (3.1, 3.2, 3.3), wobei die Behältertransporteure (3.1, 3.2, 3.3) für die gegenläufige Drehbewegung an ihrem Umfang oder an einem dortigen Drehmomentübertragungsbereich durch eine Drehmomentübertragung antriebsmäßig unmittelbar verbunden sind, und dass nur einer der wenigstens zwei Behältertransporteure (3.1, 3.2, 3.3) den Antrieb aufweist, wobei die Behältertransporteure (3.1, 3.2, 3.3) an ihrem Umfang mit Verzahnungen (8; 12, 13; 20, 24) versehen sind, die für die Drehmomentübertragung zusammenwirken, **dadurch gekennzeichnet, dass** die Verzahnungen über wenigstens einen Magnetspalt (26) zusammenwirkende magnetische oder magnetisch wirkende Verzahnungen (12, 13; 20, 24) sind, die die Drehmomentübertragung durch Magnetkraft bewirken und hierfür jeweils eine Vielzahl von Magneten (11), bevorzugt eine Vielzahl von Permanentmagneten aufweisen.

2. Behältertransportstrecke (1, 1a) nach Anspruch 1, **dadurch gekennzeichnet, dass** die Magnete (11) der magnetischen Verzahnungen (12, 13; 20, 24) in Umfangs- und/oder Drehrichtung (TR) des jeweiligen Behältertransporteurs (3.1, 3.2, 3.3) eine Polfolge mit wechselnden unterschiedlichen Magnetpolen bilden.

3. Behältertransportstrecke (1, 1a) nach Anspruch 1 oder 2, **dadurch gekennzeichnet, dass** die Magnete (11) der magnetischen Verzahnungen (12, 13) jeweils Gruppen (12.1, 13.1) bilden, in denen die Magnete (11) und deren Pole in Drehrichtung (TR) des jeweiligen Behältertransporteurs (3.1, 3.2) auf einander folgend oder aneinander anschließend angeordnet sind.

4. Behältertransportstrecke (1, 1a) nach Anspruch 3, **dadurch gekennzeichnet, dass** die Magnete in den Gruppen (12.1) der magnetischen Verzahnung (12) eines Behältertransporteurs (3.1) jeweils eine entgegengesetzte Polarität zu den entsprechenden Magneten (11) in den Gruppen (13.1) der magnetischen Verzahnung (13) des anderen Behältertransporteurs (3.2) aufweisen.

5. Behältertransportstrecke (1, 1a) nach Anspruch 3 oder 4, **dadurch gekennzeichnet, dass** die in Umfangs- oder Drehrichtung (TR) aufeinander folgenden Gruppen (12.1, 13.1) jeder magnetischen Verzahnung (12, 13) voneinander beabstandet sind, und dadurch die Unterbrechungen (14) im Bereich der Behälteraufnahmen (5) bilden.

6. Behältertransportstrecke (1, 1a) nach einem der Ansprüche 3 - 5, **dadurch gekennzeichnet, dass** die Magnete (11) oder die Magnetpole in den Gruppen (12.1) der magnetischen Verzahnung (12) an einem Behältertransporteur (3.1) einen Abstand (a) voneinander aufweisen, der unterschiedlich von dem Abstand der Magnete (11) oder der Magnetpole in den Gruppen (13.1) der magnetischen Verzahnung (13) am anderen Behältertransporteur (3.2) ist.

7. Behältertransportstrecke (1, 1a) nach einem der Ansprüche 1 oder 2, **dadurch gekennzeichnet, dass** die Magnete (11) der magnetischen Verzahnungen (20, 24) derart angeordnet und/oder gepolt sind, dass am Drehmomentübertragungsbereich zwischen zwei in Transportrichtung (TR) aneinander anschließenden Behältertransporteuren (3.1, 3.2, 3.3) jedem Magnetpol an einem Behältertransporteur (3.2) jeweils ein Magnetpol gleicher Polarität am anschließenden Behältertransporteur (3.1, 3.3) gegenüberliegt, und zwar in einer Achsrichtung tangential oder im Wesentlichen tangential zur Drehrichtung der Behältertransporteure (3.1 - 3.3).

8. Behältertransportstrecke (1, 1a) nach Anspruch 7, **dadurch gekennzeichnet, dass** bei wenigstens zwei in Transportrichtung (TR) aneinander anschließenden Behältertransporteuren (3.1; 3.2, 3.3) die magnetische Verzahnung (20) an einem Behältertransporteur (3.1, 3.3) eine Vielzahl von jeweils paarweise angeordneten und zwischen sich eine Lücke (22) bildenden Zähnen (21) aufweist und die Verzahnung am anschließenden Behältertransporteur (3.2) von einer Vielzahl von Zähnen (25) gebildet ist, die jeweils am Drehmomentübertragungsbereich oder am Behälterübergabebereich (7) in die Lücken (22) eingreifen, und dass an den die Lücken (22) bildenden Zähnen (21) und an den in die Lücken (22) eingreifenden Zähnen (25) die Magnetpole vorgesehen sind, vorzugsweise erzeugt durch an den Zähnen (21, 25) angeordnete und mit ihren Polen tangential oder im Wesentlichen tangential zur Drehrichtung (TR) der Behältertransporteure (3.1, 3.2, 3.3) orientierte Permanentmagnete (11).

9. Behältertransportstrecke (1, 1a) nach Anspruch 8, **dadurch gekennzeichnet, dass** die Zähne (25) am anschließenden Behältertransporteur (3.2) jeweils ohne mechanische Berührung in die Lücken (22) eingreifen, und zwar unter Ausbildung eines Magnetspaltes (26) zwischen diesen Zähnen (25) und den die jeweilige Lücke (22) bildenden Zähnen (21).

10. Behältertransportstrecke (1, 1a) nach einem der vorherigen Ansprüche, **dadurch gekennzeichnet, dass** die Behältertransporteure (3.1, 3.2, 3.3) für die Drehmomentübertragung am Behälterübergabebereich (7) antriebsmäßig verbunden sind.

11. Behältertransportstrecke (1, 1a) nach Anspruch 10, **dadurch gekennzeichnet, dass** sich die Verzahnungen (8; 12, 13; 20, 24) in einer Achsrichtung parallel oder im Wesentlichen parallel zur Maschinenachse (MA) oberhalb oder unterhalb der Behälteraufnahmen (5) und/oder in einem radialen Abstand von der jeweiligen Maschinenachse (MA) befinden, der gleich oder im Wesentlichen gleich demjenigen Abstand ist, den die Behälteraufnahmen (5) oder die Achsen der an den Behälteraufnahmen vorgesehenen Behälter (2) von der Maschinenachse (MA) aufweisen.

12. Behältertransportstrecke (1, 1a) nach einem der vorhergehenden Ansprüche, **dadurch gekennzeichnet, dass** die Verzahnungen (8; 12, 13; 20, 24) an den Behälteraufnahmen (5) jeweils eine Aussparung (10) oder Unterbrechung (14) aufweisen.

13. Behältertransportstrecke (1, 1a) nach einem der vorhergehenden Ansprüche, **dadurch gekennzeichnet, dass** die Verzahnungen mechanische oder zahnrad- oder zahnkranzartige Verzahnungen (8) sind.

14. Behältertransportstrecke (1, 1a) nach einem der vorhergehenden Ansprüche, mit einem Antriebsmotor für die Behältertransporteure (3.1, 3.2, 3.3).

15. Behältertransportstrecke (1, 1a) nach Anspruch 14, **dadurch gekennzeichnet, dass** die Behältertransporteure (3.1, 3.2, 3.3) Transportsterne sind, und/oder dass wenigstens ein Behältertransporteur das Transportelement oder der Rotor einer Behälterbehandlungsmaschine ist.

16. Behältertransportstrecke (1, 1a) nach Anspruch 14 oder 15, **dadurch gekennzeichnet, dass** wenigstens einer der Behältertransporteure (3.1, 3.2, 3.3) für eine hängende Aufnahme der Behälter (2) an den Behälteraufnahmen (5) ausgebildet ist.

17. Behältertransportstrecke (1, 1a) nach einem der vorhergehenden Ansprüche 14 bis 16, **dadurch gekennzeichnet, dass** sie für den Transport von Behältern (2) aus Kunststoff, vorzugsweise aus PET, beispielsweise für den Transport von Flaschen, vorzugsweise von Flaschen aus PET ausgebildet ist.

## Claims

1. Container conveying section (1, 1a), having at least two container conveyors (3.1, 3.2, 3.3) in the form of rotors and/or stars, which connect to one another at a container transfer region (7), and which in each case can be driven such as to circulate in a counter-rotational movement about a machine axis (MA), preferably a vertical or essentially vertical machine axis (MA), with receivers (5) at the container conveyors (3.1, 3.2, 3.3) for holding and conveying the containers (2) in a conveying direction (TR), as well as with a drive system with a drive for container conveyors (3.1, 3.2, 3.3), wherein, for the counter-rotational movement, the container conveyors (3.1, 3.2, 3.3) are directly drive-connected, at their circumference or at a torque-transfer region at the circumference, by a torque-transfer device, and wherein only one of the at least two container conveyors (3.1, 3.2, 3.3) comprises the drive, wherein the container conveyors (3.1, 3.2, 3.3) are provided at their circumference with tooth arrangements (8; 12, 13; 20, 24), which interact for the torque transfer, **characterised in that** the tooth arrangements are magnetic or magnetically-operating tooth arrangements (12, 13; 20, 24) which interact by way of at least one magnetic gap (26), which cause the torque transfer by magnetic force, and for this purpose comprise in each case a plurality of magnets (11), preferably a plurality of permanent magnets.

2. Container conveying section (1, 1a) according to claim 1, **characterised in that** the magnets (11) of the magnetic tooth arrangements (12, 13; 20, 24) form, in the circumferential and/or rotational direction (TR) of the respective container conveyor (3.1, 3.2, 3.3), a pole sequence with changing different magnetic poles.

3. Container conveying section (1, 1a) according to claim 1 or 2, **characterised in that** the magnets (11) of the magnetic tooth arrangements (12, 13) form in each case groups (12.1, 13.1), in which the magnets (11) and their poles are arranged in the rotational direction (TR) of the respective container conveyor (3.1, 3.2) following one another or connecting to one another.

4. Container conveying section (1, 1a) according to claim 3, **characterised in that** the magnets in the groups (12.1) of the magnetic tooth arrangement (12) of a container conveyor (3.1) exhibit in each case an opposite polarity to the corresponding magnets (11) in the groups (13.1) of the magnetic tooth arrangement (13) of the other container conveyor (3.2).

5. Container conveying section (1, 1a) according to claim 3 or 4, **characterised in that** the groups (12.1, 13.1) of each magnetic tooth arrangement (12, 13), following one another in the circumferential or rotational direction (TR), are spaced apart from one another, and thereby form the interruptions (14) in the region of the container receivers (5).

6. Container conveying section (1, 1a) according to any one of claims 3-5, **characterised in that** the magnets (11) or the magnetic poles in the groups (12.1) of the magnetic tooth arrangement (12) exhibit a distance interval (a) from one another at a container conveyor (3.1), which differs from the distance interval of the magnets (11) or of the magnetic poles in the groups (13.1) of the magnetic tooth arrangement (13) of the other container conveyor (3.2).

7. Container conveying section (1, 1a) according to any one of claims 1 or 2, **characterised in that** the magnets (11) of the magnetic tooth arrangements (20, 24) are arranged and/or poled in such a way that, at the torque-transfer region, between two container conveyors (3.1, 3.2, 3.3), connected to one another in the conveying direction (TR), in each case a magnetic pole of the same polarity is located opposite each magnetic pole at the connected container conveyor (3.1, 3.3), and specifically in an axial direction tangentially or essentially tangentially to the direction of rotation of the container conveyors (3.1 - 3.3).

8. Container conveying section (1, 1a) according to claim 7, **characterised in that**, with at least two of the container conveyors (3.1; 3.2, 3.3) connecting to one another in the conveying direction (TR), the magnetic tooth arrangement (20) at a container conveyor (3.1, 3.3) comprises a plurality of teeth (21), in each case arranged in pairs and forming a gap (22) between them, and the tooth arrangement at the connecting container conveyor (3.2) is formed from a plurality of teeth (21), which in each case engage into the gaps (22) at the torque-transfer region or at the container transfer region (7), and that the magnetic poles are provided at the teeth (25) forming the gaps (22) and engaging into the gaps (22), preferably produced by permanent magnets (11), arranged at the teeth (21, 25) and oriented with their poles tangentially or essentially tangentially to the direction of rotation (TR) of the container conveyors (3.1, 3.2, 3.3).

9. Container conveying section (1, 1a) according to claim 8, **characterised in that** the teeth (25) on the connecting container conveyor (3.2) engage in each case into the gaps (22) without mechanical contact, and specifically with the formation of a magnetic gap (26) between these teeth (25) and the teeth (21) forming the respective gap (22).

10. Container conveying section (1, 1a) according to any one of preceding claims, **characterised in that** the container conveyors (3.1, 3.2, 3.3) are drive-connected for the torque transfer at the container transfer region (7).

11. Container conveying section (1, 1a) according to claim 10, **characterised in that** the tooth arrangements (8; 12, 13; 20, 24) are located in an axial direction parallel or essentially parallel to the machine axis (MA) above or below the container receivers (5) and/or at a radial distance interval from the respective machine axis (MA), which is the same or essentially the same as that distance interval which the container receivers (5), or the axes of the containers (2) present at the container receivers, exhibit from the machine axis (MA).

12. Container conveying section (1, 1a) according to any one of preceding claims, **characterised in that** the tooth arrangements (8; 12, 13; 20, 24) at the container receivers (5) comprise in each case a cut-out opening (10) or interruption (14).

13. Container conveying section (1, 1a) according to any one of preceding claims, **characterised in that** the tooth arrangements are mechanical tooth arrangements (8) which are of mechanical or toothed-wheel or toothed rim type.

14. Container conveying section (1, 1a) according to any one of preceding claims, with a drive motor for the container conveyors (3.1, 3.2, 3.3).

15. Container conveying section (1, 1a) according to claim 14, **characterised in that** the container conveyors (3.1, 3.2, 3.3) are conveyor stars, and/or that at least one container conveyor is the conveyor element or the rotor of a container handling machine.

16. Container conveying section (1, 1a) according to claim 14 or 15, **characterised in that** at least one of the container conveyors (3.1, 3.2, 3.3) is configured for a suspended receiving position of the containers (2) at the container receivers (5).

17. Container conveying section (1, 1a) according to any one of preceding claims 14 to 16, **characterised in that**, for the conveying of containers (2), they are formed from plastic, preferably from PET, for example for the conveying of bottles, preferably of bottles made of PET.

## Revendications

1. Section de transport de récipient (1, 1a) avec au moins deux transporteurs de récipient (3.1, 3.2, 3.3) de type roue de rotor et/ou d'étoile se raccordant au niveau d'une zone de remise de récipient (7) les uns aux autres et entraînables en rotation respectivement autour d'un axe de machine (MA), de préférence autour d'un axe de machine (MA) vertical ou sensiblement vertical, dans un mouvement de rotation inverse, avec des logements (5) au niveau des transporteurs de récipient (3.1, 3.2, 3.3) pour la retenue et le transport des récipients (2) dans un sens de transport (TR), ainsi qu'avec un système d'entraînement avec un entraînement pour des transporteurs de récipient (3.1, 3.2, 3.3), dans laquelle les transporteurs de récipient (3.1, 3.2, 3.3) sont directement reliés en entraînement pour le mouvement de rotation inverse au niveau de leur périphérie ou au niveau d'une zone de transmission de couple qui s'y trouve par une transmission de couple, et que seul un des au moins deux transporteurs de récipient (3.1, 3.2, 3.3) présente l'entraînement, dans laquelle les transporteurs de récipient (3.1, 3.2, 3.3) sont pourvus au niveau de leur périphérie de dentures (8 ; 12, 13 ; 20, 24), qui coopèrent pour la transmission de couple, **caractérisée en ce que** les dentures sont des dentures (12, 13 ; 20, 24) agissant magnétiquement ou magnétiques coopérant par le biais d'au moins une fente magnétique (26) qui provoquent la transmission de couple par la force magnétique et présentent à cet effet respectivement une pluralité d'aimants (11), de préférence une pluralité d'aimants permanents.

2. Section de transport de récipient (1, 1a) selon la revendication 1, **caractérisée en ce que** les aimants (11) des dentures (12, 13; 20, 24) magnétiques dans le sens périphérique et/ou rotatif (TR) du transporteur de récipient (3.1, 3.2, 3.3) respectif forment une suite polaire avec différents pôles magnétiques variables.

3. Section de transport de récipient (1, 1a) selon la revendication 1 ou 2, **caractérisée en ce que** les aimants (11) des dentures (12, 13) magnétiques forment respectivement des groupes (12.1, 13.1), dans lesquels les aimants (11) et leur pôle sont agencés se suivant ou se raccordant les uns aux autres dans le sens rotatif (TR) du transporteur de récipient (3.1, 3.2) respectif.

4. Section de transport de récipient (1, 1a) selon la revendication 3, **caractérisée en ce que** les aimants présentent dans les groupes (12.1) de la denture (12) magnétique d'un transporteur de récipient (3.1) respectivement une polarité opposée aux aimants (11) correspondants dans les groupes (13.1) de la denture (13) magnétique de l'autre transporteur de récipient (3.2).

5. Section de transport de récipient (1, 1a) selon la revendication 3 ou 4, **caractérisée en ce que** les groupes (12.1, 13.1) se suivant dans le sens rotatif ou périphérique (TR) de chaque denture (12, 13) magnétique sont espacés l'un de l'autre, et ainsi forment les interruptions (14) dans la zone des logements de récipient (5).

6. Section de transport de récipient (1, 1a) selon l'une quelconque des revendications 3 à 5, **caractérisée en ce que** les aimants (11) ou les pôles magnétiques dans les groupes (12.1) de la denture (12) magnétique présentent au niveau d'un transporteur de récipient (3.1) une distance (a) les uns des autres qui est différente de la distance des aimants (11) ou des pôles magnétiques dans les groupes (13.1) de la denture (13) magnétique au niveau de l'autre transporteur de récipient (3.2).

7. Section de transport de récipient (1, 1a) selon l'une quelconque des revendications 1 ou 2, **caractérisée en ce que** les aimants (11) des dentures (20, 24) magnétiques sont agencés et/ou polarisés de telle manière qu'au niveau de la zone de transmission de couple entre deux transporteurs de récipient (3.1, 3.2, 3.3) se raccordant l'un à l'autre dans le sens de transport (TR) respectivement un pôle magnétique de même polarité au niveau du transporteur de récipient (3.1, 3.3) suivant soit opposé à chaque pôle magnétique au niveau d'un transporteur de récipient (3.2), et ce dans un sens axial tangentiellement ou sensiblement tangentiellement au sens rotatif des transporteurs de récipient (3.1-3.3).

8. Section de transport de récipient (1, 1a) selon la revendication 7, **caractérisée en ce que** pour au moins deux transporteurs de récipient (3.1 ; 3.2, 3.3) se raccordant l'un à l'autre dans le sens de transport (TR) la denture (20) magnétique au niveau d'un transporteur de récipient (3.1, 3.3) présente une pluralité de dents (21) formant entre elles une fente (22) et agencées respectivement par paire et la denture est formée au niveau du transporteur de récipient (3.2) suivant par une pluralité de dents (25) qui viennent en prise respectivement au niveau de la zone de transmission de couple ou au niveau de la zone de remise de récipient (7) dans les fentes (22), et qu'au niveau des dents (21) formant les fentes (22) et au niveau des dents (25) venant en prise dans les fentes (22) les pôles magnétiques sont prévus, de préférence générés par des aimants (11) permanents agencés au niveau des dents (21, 25) et orientés avec leurs pôles tangentiellement ou sensiblement tangentiellement au sens rotatif (TR) des transporteurs de récipient (3.1, 3.2, 3.3).

9. Section de transport de récipient (1, 1a) selon la revendication 8, **caractérisée en ce que** les dents (25) viennent en prise au niveau du transporteur de récipient (3.2) suivant respectivement sans contact mécanique dans les fentes (22), et ce en réalisant une fente magnétique (26) entre ces dents (25) et les dents (21) formant la fente (22) respective.

10. Section de transport de récipient (1, 1a) selon l'une quelconque des revendications précédentes, **caractérisée en ce que** les transporteurs de récipient (3.1, 3.2, 3.3) sont reliés en entraînement pour la transmission de couple au niveau de la zone de remise de récipient (7).

11. Section de transport de récipient (1, 1a) selon la revendication 10, **caractérisée en ce que** les dentures (8 ; 12, 13 ; 20, 24) se trouvent dans un sens axial parallèlement ou sensiblement parallèlement à l'axe de machine (MA) au-dessus ou en dessous des logements de récipient (5) et/ou à une distance radiale de l'axe de machine (MA) respectif qui est identique ou sensiblement identique à la distance que présentent les logements de récipient (5) ou les axes des récipients (2) prévus au niveau des logements de récipient par rapport à l'axe de machine (MA).

12. Section de transport de récipient (1, 1a) selon l'une quelconque des revendications précédentes, **caractérisée en ce que** les dentures (8; 12, 13 ; 20, 24) présentent au niveau des logements de récipient (5) respectivement un évidement (10) ou une interruption (14).

13. Section de transport de récipient (1, 1a) selon l'une quelconque des revendications précédentes, **caractérisée en ce que** les dentures sont des dentures (8) mécaniques ou de type roue dentée ou couronne dentée.

14. Section de transport de récipient (1, 1a) selon l'une quelconque des revendications précédentes, avec un moteur d'entraînement pour les transporteurs de récipient (3.1, 3.2, 3.3).

15. Section de transport de récipient (1, 1a) selon la revendication 14, **caractérisée en ce que** les transporteurs de récipient (3.1, 3.2, 3.3) sont des étoiles de transport, et/ou qu'au moins un transporteur de récipient est l'élément de transport ou le rotor d'une machine de traitement de récipient.

16. Section de transport de récipient (1, 1a) selon la revendication 14 ou 15, **caractérisée en ce qu'**au moins un des transporteurs de récipient (3.1, 3.2, 3.3) est réalisé pour un logement suspendu des récipients (2) au niveau des logements de récipient (5).

17. Section de transport de récipient (1, 1a) selon l'une quelconque des revendications 14 à 16, **caractérisée en ce qu'**elle est réalisée pour le transport de récipients (2) en matière plastique, de préférence en PET, par exemple pour le transport de bouteilles, de préférence de bouteilles en PET.
